(19) Europäisches Patentamt
European Patent Office
Office européen des brevets

(11) **EP 4 450 861 B1**

(12) **EUROPEAN PATENT SPECIFICATION**

(45) Date of publication and mention
of the grant of the patent:
**03.06.2026 Bulletin 2026/23**

(21) Application number: **22907495.0**

(22) Date of filing: **14.12.2022**

(51) International Patent Classification (IPC):
*D04H 1/413* (2012.01)     *D04H 1/4209* (2012.01)
*D04H 1/4218* (2012.01)     *D04H 1/4309* (2012.01)
*D04H 1/435* (2012.01)     *D04H 1/542* (2012.01)
*D04H 1/545* (2012.01)     *D04H 1/55* (2012.01)
*D04H 1/58* (2012.01)     *D04H 1/64* (2012.01)
*D04H 1/732* (2012.01)     *H01M 10/625* (2014.01)
*H01M 10/653* (2014.01)     *H01M 10/6554* (2014.01)
*H01M 10/658* (2014.01)     *H01M 50/293* (2021.01)

(52) Cooperative Patent Classification (CPC):
**F16L 59/02; D04H 1/413; D04H 1/4209;
D04H 1/4218; D04H 1/4309; D04H 1/435;
D04H 1/542; D04H 1/545; D04H 1/546; D04H 1/55;
D04H 1/58; D04H 1/64; D04H 1/732; H01M 10/613;
H01M 10/617;**             (Cont.)

(86) International application number:
**PCT/JP2022/046111**

(87) International publication number:
**WO 2023/112972 (22.06.2023 Gazette 2023/25)**

(54) **HEAT TRANSFER SUPPRESSION SHEET, PRODUCTION METHOD THEREFOR, AND BATTERY PACK**

WÄRMEÜBERTRAGUNGSUNTERDRÜCKUNGSFOLIE, VERFAHREN ZUR HERSTELLUNG DAVON UND BATTERIEPACK

FEUILLE DE SUPPRESSION DE TRANSFERT DE CHALEUR, SON PROCÉDÉ DE FABRICATION, ET BLOC-BATTERIE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.12.2021 JP 2021205572**

(43) Date of publication of application:
**23.10.2024 Bulletin 2024/43**

(73) Proprietor: **IBIDEN CO., LTD.
Ogaki-shi, Gifu 503-8604 (JP)**

(72) Inventors:
• **ONAYA, Naoki**
**Ibi-gun, Gifu 501-0695 (JP)**
• **JIMBO, Naoyuki**
**Ibi-gun, Gifu 501-0695 (JP)**

(74) Representative: **Hoffmann Eitle
Patent- und Rechtsanwälte PartmbB
Arabellastraße 30
81925 München (DE)**

(56) References cited:
WO-A1-2013/129541    JP-A- 2005 325 459
JP-A- 2005 335 279    JP-A- 2006 063 300
JP-A- 2013 535 582    JP-A- 2017 166 759
JP-A- 2021 034 278

EP 4 450 861 B1

(52) Cooperative Patent Classification (CPC): (Cont.)
**H01M 10/625; H01M 10/651; H01M 10/653;
H01M 10/6554; H01M 10/658; H01M 10/659;
H01M 50/293;** Y02E 60/10

**Description**

TECHNICAL FIELD

The present invention relates to a heat transfer suppression sheet, a production method therefor, and a battery pack including the heat transfer suppression sheet.

BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells is connected in series or in parallel to serve as a power source for a driving electric motor.
In addition, a lithium ion secondary battery, which has higher capacity and is capable of higher output than a lead-acid battery, a nickel-metal hydride battery, or the like, is mainly used for the battery cells. When a battery cell suddenly rises in temperature due to an internal short circuit or overcharging of the battery, and then causes thermal runaway that continues to generate heat, the heat from a battery cell that has experienced thermal runaway may propagate to other adjacent battery cells, thereby causing thermal runaway in other battery cells.
As a method of suppressing the propagation of heat from the battery cell that has experienced thermal runaway as described above, a method of interposing a heat insulation sheet between battery cells is generally used.
For example, Patent Literature 1 discloses a heat insulation sheet for a battery pack, which contains a first particle composed of a silica nanoparticle and a second particle composed of a metal oxide, in which the content of the first particle is limited. In addition, Patent Literature 1 discloses that the heat insulation sheet may contain a binder composed of at least one kind selected from a fiber, a binder, and a heat-resistant resin.
Patent Literature 2 describes a nonwoven electret fibrous web comprising a plurality of randomly oriented discrete fibers comprising electret fibers, the nonwoven electret fibrous web further comprising a plurality of non-hollow projections extending from a major surface of the nonwoven electret fibrous web, and a plurality of substantially planar land areas formed between each adjoining projection in a plane defined by and substantially parallel with the major surface, wherein the plurality of randomly oriented discrete fibers further comprises multi-component fibers having at least a first region having a first melting temperature and a second region having a second melting temperature, wherein the first melting temperature is less than the second melting temperature, and wherein at least a portion of the oriented discrete fibers are bonded together at a plurality of intersection points with the first region of the multi-component fibers.

CITATION LIST

PATENT LITERATURE

    Patent Literature 1: JP2021-34278A
    Patent Literature 2: JP2013-535582A

SUMMARY OF INVENTION

TECHNICAL PROBLEM

The heat insulation sheet for a battery pack is required to retain a shape thereof and continue to be present between the battery cells even when the battery cells reach a high temperature due to thermal runaway. In particular, in recent battery packs, the capacity of the battery cells has been further improved, so that an expansion rate during charging and discharging has been increased. Therefore, when the temperature of the battery cell rises due to an abnormality in the battery cell, the strength of the whole heat insulation sheet is difficult to maintain, and the heat insulation performance decreases, which may cause a thermal chain reaction.
Although the heat insulation sheet disclosed in the above Patent Literature 1 maintains an excellent heat insulation property even when a compressive stress increases, further improvements in strength are required.
The present invention has been made in view of the above problems, and an object thereof is to provide a heat transfer suppression sheet that can maintain a shape thereof, even when the heat transfer suppression sheet is exposed to a high temperature, to thereby suppress a decrease in heat insulation performance, a production method therefor, and a battery pack including the heat transfer suppression sheet.

SOLUTION TO PROBLEM

The above object of the present invention is achieved by the following configuration [1] relating to a heat transfer suppression sheet.

[1] A heat transfer suppression sheet containing:

a first inorganic particle;
a resin binder; and
an organic fiber, in which
the organic fiber has a glass transition point higher than a glass transition point of the resin binder,
at least a part of the organic fiber is fused each other to form a three-dimensional framework, and
the resin binder is fused to a part of the framework and at least a part of the first inorganic particle, and at least the part of the first inorganic particle adheres to the framework.

Preferred embodiments of the present invention relating to the heat transfer suppression sheet relate to the following [2] to [16].

[2] The heat transfer suppression sheet according to [1], in which the glass transition point of the organic fiber is 250°C or lower.

[3] The heat transfer suppression sheet according to [1]or [2], in which the glass transition point of the resin binder is -10°C or higher.

[4] The heat transfer suppression sheet according to any one of [1] to [3], in which a difference between the glass transition point of the resin binder and the glass transition point of the organic fiber is 10°C or more and 130°C or less.

[5] The heat transfer suppression sheet according to any one of [1] to [4], in which the organic fiber has a water dissolution temperature of 60°C or higher.

[6] The heat transfer suppression sheet according to any one of [1] to [5], in which the organic fiber has an average fiber length of 0.5 mm or more and 10 mm or less.

[7] The heat transfer suppression sheet according to any one of [1] to [6], in which

with respect to a total mass of the heat transfer suppression sheet,
a content of the organic fiber is 0.5 mass% or more and 12 mass% or less, and
a content of the resin binder is 0.5 mass% or more and 20 mass% or less.

[8] The heat transfer suppression sheet according to any one of [1] to [7], in which the resin binder includes at least one kind selected from a styrene-butadiene resin, an acrylic resin, a silicone-acrylic resin, and a styrene resin.

[9] The heat transfer suppression sheet according to any one of [1] to [8], in which the organic fiber includes at least one kind selected from a polyvinyl alcohol fiber, a polyethylene fiber, a nylon fiber, a polyurethane fiber, and an ethylene-vinyl alcohol copolymer fiber.

[10] The heat transfer suppression sheet according to any one of [1] to [9], in which the first inorganic particle is composed of at least one kind selected from an oxide particle, a carbide particle, a nitride particle, and an inorganic hydrate particle.

[11] The heat transfer suppression sheet according to any one of [1] to [10], further containing:
a first inorganic fiber and a second inorganic fiber different from each other in at least one property selected from an average fiber diameter, a shape, and a glass transition point.

[12] The heat transfer suppression sheet according to [11], in which

the average fiber diameter of the first inorganic fiber is larger than the average fiber diameter of the second inorganic fiber, and
the first inorganic fiber is linear or acicular, and the second inorganic fiber is dendritic or curly.

[13] The heat transfer suppression sheet according to [11], in which

the first inorganic fiber is an amorphous fiber,
the second inorganic fiber is at least one kind of fiber selected from an amorphous fiber having a glass transition point higher than the glass transition point of the first inorganic fiber and a crystalline fiber, and
the average fiber diameter of the first inorganic fiber is larger than the average fiber diameter of the second inorganic fiber.

[14] The heat transfer suppression sheet according to [11], in which

the first inorganic particle includes at least one kind selected from a nanoparticle, a hollow particle, and a porous particle,

the first inorganic fiber is an amorphous fiber, and

the second inorganic fiber is at least one kind of inorganic fiber selected from an amorphous fiber having a glass transition point higher than the glass transition point of the first inorganic fiber and a crystalline fiber.

[15] The heat transfer suppression sheet according to any one of [11] to [14], in which the first inorganic fiber is a fiber containing $SiO_2$, and the second inorganic fiber is at least one kind of fiber selected from a glass fiber, a silica fiber, an alumina fiber, an alumina silicate fiber, a zirconia fiber, glass wool, a carbon fiber, a soluble fiber, a refractory ceramic fiber, an aerogel composite, a magnesium silicate fiber, an alkaline earth silicate fiber, a potassium titanate fiber, and a natural mineral-based fiber.

[16] The heat transfer suppression sheet according to any one of [1] to [15], further containing:

a second inorganic particle composed of a metal oxide.

In addition, the above object of the present invention is achieved by the following configuration [17] relating to a method for producing a heat transfer suppression sheet.

[17] A method for producing a heat transfer suppression sheet, which is a method for producing the heat transfer suppression sheet according to any one of [1] to [16], the method including:

a step of obtaining a dispersion liquid containing the first inorganic particle, the resin binder, and the organic fiber;

a step of obtaining a wet sheet by removing the dispersion liquid; and

a step of heating and then cooling the wet sheet, in which

a heating temperature at which the wet sheet is heated is set higher than the glass transition point of the organic fiber by 10°C or more and 50°C or less.

Preferred embodiments of the present invention relating to the method for producing a heat transfer suppression sheet relate to the following [18].

[18] The method for producing a heat transfer suppression sheet according to [17], in which the dispersion liquid is an emulsion in which the resin binder is dispersed in water.

Further, the above object of the present invention is achieved by the following configuration [19] relating to a battery pack.

[19] A battery pack including:

a plurality of battery cells; and

the heat transfer suppression sheet according to any one of [1] to [16], in which

the plurality of battery cells is connected in series or in parallel.

ADVANTAGEOUS EFFECTS OF INVENTION

With the heat transfer suppression sheet according to the present invention, the heat transfer suppression sheet contains the first inorganic particle having an excellent heat transfer suppression effect, and thus has an excellent heat transfer suppression effect. In addition, with the heat transfer suppression sheet according to the present invention, since the glass transition point of the organic fiber is higher than the glass transition point of the resin binder, during production, the organic fiber is solidified to form a framework, and then the framework is reinforced with the resin binder. Therefore, it is possible to achieve both excellent compression properties and heat transfer suppression effect, thereby suppressing a decrease in heat insulation performance.

In the method for producing a heat transfer suppression sheet according to the present invention, since the heating temperature is appropriately controlled, a framework can be reliably formed with an organic fiber and excellent compression properties can be obtained.

With the battery pack according to the present invention, since the heat transfer suppression sheet has excellent compression properties and heat transfer suppression effect as described above, thermal runaway of the battery cells in the battery pack and spread of flame to the outside of the battery case can be suppressed.

BRIEF DESCRIPTION OF DRAWINGS

[Fig. 1] (a) to (c) in Fig. 1 are schematic diagrams showing a method for producing a heat transfer suppression sheet according to a first embodiment of the present invention in order of steps.

[Fig. 2] Fig. 2 is a schematic diagram showing a heat transfer suppression sheet according to a second embodiment of the present invention.

[Fig. 3] Fig. 3 is a schematic diagram showing a battery pack according to an embodiment of the present invention.

[Fig. 4] (a) to (c) in Fig. 4 are schematic diagrams showing a method for producing a test material in Comparative Example No. 1 in order of steps.

[Fig. 5] Fig. 5 is a schematic diagram showing a compression property test method.

[Fig. 6] Fig. 6 is a schematic diagram showing a heat transfer property test method.

[Fig. 7] Fig. 7 is a graph showing a relationship between a compressive stress and a compression rate for each test material, where the horizontal axis is the compression rate and the vertical axis is the compressive stress.

[Fig. 8] Fig. 8 is a graph showing a relationship between a lower surface temperature and an elapsed time for each test material, where the horizontal axis is the elapsed time and the vertical axis is the lower surface temperature.

[Fig. 9] Fig. 9 is a graph showing a relationship between a heat resistivity and a compressive stress for each test material, where the horizontal axis is the compressive stress and the vertical axis is the heat resistivity.

DESCRIPTION OF EMBODIMENTS

The inventors of the present invention have conducted intensive studies on a heat transfer suppression sheet that can solve the above problems.

As a result, it has been found that when the heat transfer suppression sheet contains a first inorganic particle, a resin binder, and an organic fiber having a glass transition point higher than that of the resin binder, strength against a pressure can be improved, and as a result, an excellent heat insulation performance can be maintained.

Specifically, when a wet sheet containing the above material is heated during production of a heat transfer suppression sheet, in a case where the heating temperature is appropriately controlled, the organic fiber is in a semi-molten state. Then, with subsequent cooling, the organic fiber having a high glass transition point solidifies first, so that locations that are in contact with each other adhere to form a framework. Thereafter, with further cooling, the resin binder solidifies on the surface of the framework formed of the organic fiber, and the framework is reinforced. In this way, the heat transfer suppression sheet according to the present invention has a strong framework, and even when the heat transfer suppression sheet is pressed due to expansion of a battery cell, the shape thereof can be maintained and a decrease in heat insulation performance can be suppressed.

First, a method for producing a heat transfer suppression sheet according to an embodiment of the present invention will be described in detail with reference to the drawings. Thereafter, a heat transfer suppression sheet according to the present embodiment and the materials constituting the same will be descried in detail. Further, a battery pack according to the present embodiment will be descried.

Note that the present invention is not limited to the embodiments described below, and can be freely changed and implemented without departing from the gist of the present invention.

[1. Method for Producing Heat Transfer Suppression Sheet]

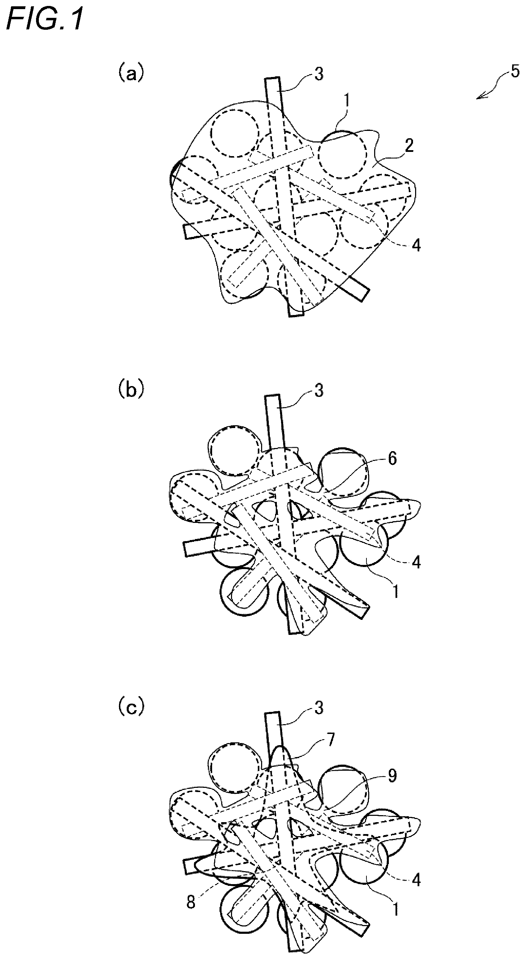

(a) to (c) in Fig. 1 are schematic diagrams showing a method for producing a heat transfer suppression sheet according to a first embodiment of the present invention in order of steps.

As shown in (a) in Fig. 1, a first inorganic particle 1, an emulsion 2 in which a resin binder is dispersed in water, an organic fiber 3 having a glass transition point higher than that of the resin binder, and an inorganic fiber 4 are prepared, and are mixed and stirred to obtain a dispersion liquid 5. Next, the dispersion liquid 5 is dehydrated (removing the liquid) to prepare a wet sheet.

The wet sheet is then heated. At this time, as shown in (b) in Fig. 1, as the temperature rises, water in the emulsion 2 evaporates and a molten resin binder 6 is obtained. Then, the sheet is further heated, and thereby at least a part of the surface of the organic fiber 3 is melted.

Thereafter, the sheet is cooled, and thereby the organic fibers 3 are fused to each other to form a fused portion 7, as shown in (c) in Fig. 1. The sheet is further cooled to form a solidified resin binder 9, and the heat transfer suppression sheet according to the present embodiment can be obtained.

Since the emulsion 2 containing a resin binder is used in the heat transfer suppression sheet according to the present embodiment produced by the production method as described above, all the materials are uniformly dispersed, and in the dispersion liquid, the organic fiber 3 is present in irregular directions.

In the process of heating the wet sheet to a predetermined temperature, the resin binder is completely melted, and then a part of the surface of the organic fiber 3 having a high glass transition point is melted.

In the process of cooling the sheet after heating, the melted surface part of the organic fiber 3 solidifies first, and the fused portion 7 is formed at a location where the organic fibers 3 are in contact with each other.

As described above, the organic fiber 3 is present in irregular directions in the dispersion liquid in which the raw materials are mixed. Therefore, when a part of the surface of the organic fiber 3 is melted and then cooled to a temperature lower than the glass transition point of the organic fiber 3, at least a part of the organic fibers 3 are fused each other, and a three-dimensional framework 8 is formed. As a result, the obtained framework 8 retains the shape of the entire heat transfer suppression sheet.

Thereafter, when the sheet is cooled to a temperature lower than the glass transition point of the resin binder, the melted resin binder solidifies on the surface of the framework 8, and also solidifies between the framework 8 and the first inorganic particle 1 and between the framework 8 and the inorganic fiber 4. Accordingly, the first inorganic particle 1 and the inorganic fiber 4 adhere to the framework 8, and the framework 8 is reinforced by the solidified resin binder 9.

In this way, the heat transfer suppression sheet according to the present embodiment has a strong framework 8, and even when the heat transfer suppression sheet is pressed due to expansion of a battery cell, the shape thereof can be maintained and a decrease in heat insulation performance can be suppressed.

Note that, the first inorganic particle 1, the emulsion 2 containing a resin binder, the organic fiber 3 having a glass transition point higher than that of the resin binder, and the inorganic fiber 4 are used as materials in the present embodiment, but the inorganic fiber 4 is not necessarily required. The effects obtained by adding the inorganic fiber 4 will be described later. In addition, the emulsion 2 containing a resin binder does not necessarily have to be in the form of an emulsion. It is sufficient that the resin binder is uniformly dispersed in a liquid by some method, and it is more preferable that all the materials are uniformly dispersed in the dispersion liquid. Therefore, it is sufficient that the first inorganic particle 1, the resin binder (not shown), the organic fiber 3, the inorganic fiber 4, and a liquid for preparing a dispersion liquid are mixed for dispersion. Note that, as the liquid for dispersing the resin binder, water is preferably used from the viewpoint of reducing an environmental load.

Next, conditions in the method for producing a heat transfer suppression sheet according to the present embodiment will be described.

<Heating Temperature for Wet Sheet>

In the step of heating the wet sheet, the heating temperature is set higher than the glass transition point of the organic fiber 3 by a range of 10°C or more and 50°C or less.

That is, when the heating temperature for the wet sheet is t (°C) and the glass transition point of the organic fiber 3 is Tg (°C), in a relationship of t < Tg+10, melting of the surface of the organic fiber 3 is insufficient, and the adhesive force between the organic fibers 3 is weak, making it impossible to form a strong framework.

On the other hand, in a relationship of t > Tg+50, the surface of the organic fiber 3 is completely melted by heating, and a shape as a framework cannot be formed.

Therefore, the heating temperature t for the wet sheet is set to Tg+10 (°C) or higher, and preferably Tg+15 (°C) or higher. In addition, the heating temperature t for the wet sheet is set to Tg+50 (°C) or lower, and preferably Tg+30 (°C) or lower.

[2. Heat Transfer Suppression Sheet]

(First Embodiment)

As shown in (c) in Fig. 1, a heat transfer suppression sheet according to a first embodiment contains the first inorganic particle 1, the resin binder 9, the organic fiber 3, and the inorganic fiber 4. In addition, the glass transition point of the organic fiber 3 is higher than the glass transition point of the resin binder 9.

In the heat transfer suppression sheet according to the first embodiment configured in this manner, since the first inorganic particle 1 is a heat-resistant material, and inside the heat transfer suppression sheet, countless minute spaces are formed in which the resin binder 9 solidified after melting, the first inorganic particle 1, the organic fiber 3, and the inorganic fiber 4 are not present and air also exhibits a heat insulation effect, an excellent heat transfer suppression effect can be obtained.

Since the glass transition point of the organic fiber 3 is higher than the glass transition point of the resin binder 9, as described in the above production method, the organic fiber 3 forms a framework and the framework is further reinforced by the resin binder 9 during heating and cooling in the production process.

Specifically, in the heat transfer suppression sheet according to the present embodiment, at least a part of the organic fibers 3 are fused to each other, thereby forming the three-dimensional framework 8. In addition, since the resin binder 9 is fused to a part of the surface of the framework 8 and also fused to a part of the first inorganic particle 1 or the inorganic fiber 4, the first inorganic particle 1 and the inorganic fiber 4 adhere to the framework, and the framework 8 is reinforced.

Therefore, the heat transfer suppression sheet according to the present embodiment has high strength and can suppress a decrease in heat insulation performance even when a pressing force is applied.

(Second Embodiment)

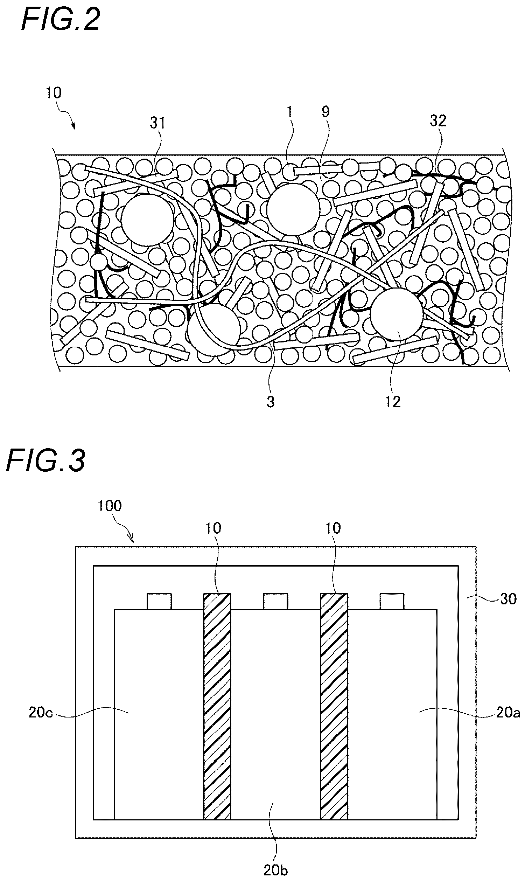

Fig. 2 is a schematic diagram showing a heat transfer suppression sheet according to a second embodiment of the present invention.

As shown in Fig. 2, a heat transfer suppression sheet 10 according to the second embodiment contains the first inorganic particle 1, the resin binder 9, the organic fiber 3, a second inorganic particle 12, a first inorganic fiber 31, and a second inorganic fiber 32. In addition, the glass transition point of the organic fiber 3 is higher than the glass transition point of the resin binder 9. Further, the first inorganic particle 1 and the second inorganic particle 12 are inorganic particle having different heat transfer suppression effects, and the first inorganic fiber 31 and the second inorganic fiber 32 are inorganic fibers having different properties.

In the heat transfer suppression sheet according to the second embodiment configured in this manner, since the glass transition point of the organic fiber 3 is higher than the glass transition point of the resin binder 9, similar to the first embodiment, at least a part of the organic fibers 3 are fused each other, thereby forming the three-dimensional framework 8.

In addition, the resin binder 9 is fused to a part of the surface of the framework 8, the first inorganic particle 1, the second inorganic particle 12, the first inorganic fiber 31, and the second inorganic fiber 32 adhere to the framework, and the framework 8 is reinforced.

Therefore, the heat transfer suppression sheet according to the second embodiment also has high strength and can suppress a decrease in heat insulation performance even when a pressing force is applied.

In addition, in the present embodiment, since the first inorganic particle 1 and the second inorganic particle 12 having different heat transfer suppression effects are used each other, a heating element can be cooled in multiple stages, a heat absorption effect can be exhibited over a wider temperature range, and the heat insulation performance can be further improved.

Further, in the present embodiment, since the first inorganic fiber 31 and the second inorganic fiber 32 different from each other in at least one property selected from an average fiber diameter, a shape, and a glass transition point are contained, the mechanical strength of the heat transfer suppression sheet 10 and a retention property for the first inorganic particle 1 and the second inorganic particle 12 can be improved.

Hereinafter, the materials used for the heat transfer suppression sheet according to the present embodiment will be described in detail.

<2-1. Resin Binder>

The resin binder 9 that can be used in the present embodiment is not particularly limited as long as it has a glass transition point lower than the glass transition point of the organic fiber 3 to be described later. For example, a resin binder 9 containing at least one kind selected from a styrene-butadiene resin, an acrylic resin, a silicone-acrylic resin, and a styrene resin can be used.

The glass transition point of the resin binder 9 is not particularly defined, and is preferably -10°C or higher.

Note that, when the glass transition point of the resin binder 9 is equal to or higher than room temperature, in the case of using the heat transfer suppression sheet containing the resin binder 9 at room temperature, the strength of the heat transfer suppression sheet can be further improved.

Therefore, the glass transition point of the resin binder 9 is, for example, more preferably 20°C or higher, still more preferably 30°C or higher, even more preferably 50°C or higher, and particularly preferably 60°C or higher.

(2-1-1. Content of Resin Binder)

In the present embodiment, when the content of the resin binder 9 is appropriately controlled, the effect of reinforcing the framework by the organic fiber 3 can be sufficiently obtained.

The content of the resin binder 9 is preferably 0.5 mass% or more, and more preferably 1 mass% or more with respect to the total mass of the heat transfer suppression sheet 10. In addition, it is preferably 20 mass% or less, and more preferably 10 mass% or less.

Note that, in the heat transfer suppression sheet 10 according to the present embodiment, even when the total content of the organic fiber 3 and the resin binder 9 is equivalent to the content of organic materials in a heat insulation sheet in the related art, the above structure improves the strength against compression, making it possible to achieve both a heat insulation performance and strength.

<2-2. Organic Fiber>

The organic fiber 3 that can be used in the present embodiment is not particularly limited as long as it has a glass transition point higher than the glass transition point of the resin binder 9. For example, an organic fiber 3 containing at least one kind selected from a polyvinyl alcohol (PVA) fiber, a polyethylene fiber, a nylon fiber, a polyurethane fiber, and an ethylene-vinyl alcohol copolymer fiber can be used.

Note that, in the production of the heat transfer suppression sheets, since it is difficult to raise the heating temperature higher than 250°C, the glass transition point of the organic fiber 3 is preferably 250°C or lower, and more preferably 200°C or lower.

The lower limit value of the glass transition point of the organic fiber 3 is also not particularly limited. When the difference from the glass transition point of the above resin binder 9 is 10°C or more, the resin binder solidifies after the organic fiber 3 in a semi-molten state completely solidifies in the cooling step during production, so that a sufficient effect of reinforcing the framework by the resin binder 9 can be obtained. Therefore, the difference between the glass transition point of the resin binder 9 and the glass transition point of the organic fiber 3 is preferably 10°C or more, and more preferably 30°C or more.

On the other hand, when the difference in glass transition point therebetween is 130°C or less, the time from a time when the organic fiber 3 completely solidifies to a time when the resin binder begins to solidify can be appropriately adjusted, and the resin binder solidifies while remaining in a well-dispersed state, so that the effect of reinforcing the framework 8 can be further obtained. Therefore, the difference between the glass transition point of the resin binder 9 and the glass transition point of the organic fiber 3 is preferably 130°C or less, more preferably 120°C or less, still more preferably 100°C or less, even more preferably 80°C or less, and particularly preferably 70°C or less.

When two or more kinds of organic fibers are contained in the heat transfer suppression sheet according to the present embodiment, any organic fiber may be used as long as at least one kind of organic fiber acts as a framework, that is, any organic fiber having a glass transition point higher than the glass transition point of the resin binder. Note that, similar to above, the difference between the glass transition point of the resin binder 9 and the glass transition point of the at least one kind of organic fiber is preferably 10°C or more, more preferably 30°C or more, still more preferably 130°C or less, even more preferably 120°C or less, even still more preferably 100°C or less, yet still more preferably 80°C or less, and particularly preferably 70°C or less.

In the present embodiment, when the contents of the organic fiber 3 and the resin binder 9 are appropriately controlled, the organic fiber 3 can sufficiently function as a framework, and a sufficient effect of reinforcing the framework by the resin binder 9 can be obtained. The content of the organic fiber 3 is preferably 0.5 mass% or more, and more preferably 1 mass% or more with respect to the total mass of the heat transfer suppression sheet. In addition, it is preferably 12 mass% or less, and more preferably 8 mass% or less. Note that, when the heat transfer suppression sheet contains a plurality of organic fibers having a glass transition point higher than the glass transition point of the resin binder, the total amount of the plurality of organic fibers is preferably within the range of the content of the organic fiber 3 described above.

As described above, when two or more kinds of organic fibers are contained in the heat transfer suppression sheet according to the present embodiment, it is sufficient that at least one kind of organic fiber has a glass transition point higher than the glass transition point of the resin binder, and it is more preferable that a crystalline organic fiber having no glass transition point is further included as other organic fibers.

Since the crystalline organic fiber having no glass transition point does not have a softening point, in the present embodiment, even when the organic fiber serving as the framework is exposed to such a high temperature as to soften, the strength of the entire heat transfer suppression sheet can be maintained.

In addition, when the crystalline organic fiber having no glass transition point is contained, the organic fiber also acts as a framework of the heat transfer suppression sheet at room temperature. Therefore, flexibility and handleability of the heat transfer suppression sheet can be improved.

Note that, examples of the crystalline organic fiber having no glass transition point include a polyester (PET) fiber.

As described above, in the present embodiment, water is preferably used as the liquid for dispersing the resin binder. Therefore, in the case of using water, it is preferable to use an organic fiber having low solubility in water. In the present embodiment, a water dissolution temperature is used as an indicator of the solubility in water. That is, the water dissolution temperature of the organic fiber 3 is preferably 60°C or higher, more preferably 70°C or higher, and still more preferably 80°C or higher.

The fiber length of the organic fiber 3 is also not particularly limited, and from the viewpoint of ensuring moldability and processability, the average fiber length of the organic fiber 3 is preferably 10 mm or less.

On the other hand, from the viewpoint of making the organic fiber 3 function as a framework and ensuring the compressive strength of the heat transfer suppression sheet, the average fiber length of the organic fiber 3 is preferably 0.5 mm or more.

<2-3. Inorganic particle>

When an average secondary particle diameter of the inorganic particle is 0.01 μm or more, the inorganic particle is easily available and an increase in production cost can be suppressed. When the average secondary particle diameter is 200 μm or less, a desired heat insulation effect can be obtained. Therefore, the average secondary particle diameter of the inorganic particle is preferably 0.01 μm or more and 200 μm or less, and more preferably 0.05 μm or more and 100 μm or less.

As the inorganic particle, a single kind of inorganic particle may be used, or two or more kinds of inorganic particles (the first inorganic particle 1 and the second inorganic particle 12) may be used in combination. From the viewpoint of the heat transfer suppression effect, the first inorganic particle 1 and the second inorganic particle 12 are preferably a particle composed of at least one kind of inorganic material selected from an oxide particle, a carbide particle, a nitride particle, and an inorganic hydrate particle, and more preferably an oxide particle. The forms of the first inorganic particle 1 and the second inorganic particle 12 are not particularly limited. It is preferable to contain at least one kind selected from a nanoparticle, a hollow particle, and a porous particle. Specifically, a silica nanoparticle, a metal oxide particle, an inorganic balloons such as a microporous particle or a hollow silica particle, a particle composed of a thermally expandable inorganic material, a particle composed of a hydrous porous material, or the like can also be used.

Note that, when two or more kinds of inorganic particles having different heat transfer suppression effects are combined, the heating element can be cooled in multiple stages and the heat absorption effect can be exhibited over a wider temperature range. Specifically, it is preferable to use a large-diameter particle and a small-diameter particle in combination. For example, in the case of using a nanoparticle as one of the inorganic particle, it is preferable to contain an inorganic particle composed of a metal oxide as the other inorganic particle. Hereinafter, the inorganic particle will be described in more detail, with a small-diameter inorganic particle as the first inorganic particle 1 and a large-diameter inorganic particle as the second inorganic particle 12.

<2-3-1. First Inorganic particle>

(Oxide particle)

An oxide particle has a high refractive index and have a high effect of diffusely reflecting light, so that when an oxide particle is used as the first inorganic particle 1, radiant heat transfer can be suppressed, particularly in a high temperature range with abnormal heat generation or the like. As the oxide particle, at least one kind of particle selected from silica, titania, zirconia, zircon, barium titanate, zinc oxide, and alumina can be used. That is, among the above oxide particle that can be used as the inorganic particle, only one kind or two or more kinds of oxide particle may be used. Particularly, silica is a component having a high heat insulation property, and titania is a component having a high refractive index compared to other metal oxides, and has a high effect of diffusely reflecting light and blocking radiant heat in a high temperature range of 500°C or higher. Therefore, silica and titania are most preferably used as the oxide particle.

(Average primary particle diameter of oxide particle: 0.001 μm or more and 50 μm or less)

Since the particle diameter of the oxide particle may influence an effect of reflecting radiant heat, when the average primary particle diameter thereof is limited to a predetermined range, an even higher heat insulation property can be obtained.

That is, when the average primary particle diameter of the oxide particle is 0.001 μm or more, a wavelength thereof is sufficiently larger than a wavelength of light that contributes to heating, and it diffusely reflects the light efficiently. Therefore, in a high temperature range of 500°C or higher, the radiant heat transfer of heat within the heat transfer suppression sheet can be suppressed, and the heat insulation property can be further improved.

On the other hand, when the average primary particle diameter of the oxide particle is 50 μm or less, even with compression, the number of contact points between the particle does not increase, and it is difficult to form a conductive heat transfer path. Therefore, the influence on the heat insulation property particularly in a normal temperature range where the conductive heat transfer is dominant can be reduced.

Note that in the present invention, the average primary particle diameter can be determined by observing particle with a microscope, comparing the particle with a standard scale, and taking an average of any 10 particles.

(Nanoparticle)

In the present invention, the nanoparticle refers to a nanometer-order particle having a spherical or nearly spherical shape and having an average primary particle diameter of less than 1 μm. The nanoparticle has a low density and thus suppresses the conductive heat transfer, and when the nanoparticle is used as the first inorganic particle 1, voids are further finely dispersed, so that an excellent heat insulation property of suppressing the convective heat transfer can be obtained. Therefore, it is preferable to use a nanoparticle since it can suppress the conduction of heat between adjacent nanoparticles during normal use of a battery in a normal temperature range.

Further, when a nanoparticle having a small average primary particle diameter is used as the oxide particle, even when the heat transfer suppression sheet is compressed by expansion due to thermal runaway of the battery cell and the internal density increases, an increase in conductive heat transfer of the heat transfer suppression sheet can be suppressed. This is thought to be because the nanoparticle tend to form fine voids between particles due to a repulsive force caused by static electricity, the bulk density thereof is low, and it is filled with the particle so as to provide a cushioning property.

Note that in the present invention, when the nanoparticle is used as the first inorganic particle 1, the kind thereof is not particularly limited as long as the above definition of nanoparticle is met. For example, since a silica nanoparticle is a material having a high heat insulation property and have a few contact points between particles, the amount of heat conducted by the silica nanoparticle is smaller than that in a case of using a silica particle having a large particle diameter. In addition, since a generally available silica nanoparticle is a bulk density of about 0.1 (g/cm$^3$), for example, even when battery cells disposed on both sides of a heat insulation sheet thermally expand and a large compressive stress is applied to the heat insulation sheet, the size (area) or the number of contact points between the silica nanoparticles does not increase remarkably, and the heat insulation property can be maintained. Therefore, it is preferable to use a silica nanoparticle as the nanoparticle. As the silica nanoparticle, wet silica, dry silica, aerogel, or the like can be used.

(Average primary particle diameter of nanoparticle: 1 nm or more and 100 nm or less)

When the average primary particle diameter of the nanoparticle is limited to a predetermined range, an even higher heat insulation property can be obtained.

That is, when the average primary particle diameter of the nanoparticle is 1 nm or more and 100 nm or less, the convective heat transfer and the conductive heat transfer of the heat within the heat transfer suppression sheet can be suppressed particularly in a temperature range of lower than 500°C, and the heat insulation property can be further improved. In addition, even when a compressive stress is applied, voids remaining between the nanoparticles and contact points between many particles can suppress the conductive heat transfer, and the heat insulation property of the heat transfer suppression sheet can be maintained.

Note that the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

(Inorganic hydrate particle)

The inorganic hydrate particle exhibits a so-called "heat absorption effect" that the inorganic hydrate particle receives heat from the heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide ($Al(OH)_3$), magnesium hydroxide ($Mg(OH)_2$), calcium hydroxide ($Ca(OH)_2$), zinc hydroxide ($Zn(OH)_2$), iron hydroxide ($Fe(OH)_2$), manganese hydroxide ($Mn(OH)_2$), zirconium hydroxide ($Zr(OH)_2$), and gallium hydroxide ($Ga(OH)_3$).

For example, aluminum hydroxide has about 35% crystal water, and as shown in the following formula, thermally decomposes to release the crystal water and exhibits a heat absorption effect. Then, after releasing the crystal water, aluminum hydroxide forms alumina ($Al_2O_3$), which is a porous material, and functions as a heat insulation material.

$$2Al(OH)_3 \rightarrow Al_2O_3 + 3H_2O$$

Note that, as will be described later, the heat transfer suppression sheet 10 according to the present embodiment is preferably interposed between, for example, battery cells, but in a battery cell that has experienced thermal runaway, the temperature rapidly rises to over 200°C and continues to rise to about 700°C. Therefore, it is preferable that the inorganic particle is composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise.

Therefore, these are preferred inorganic hydrates.

(Average secondary particle diameter of inorganic hydrate particle: 0.01 $\mu$m or more and 200 $\mu$m or less)

In the case where the inorganic hydrate particle is used as the first inorganic particle 1, when the average particle diameter thereof is too large, it takes a certain amount of time for the first inorganic particle 1 (inorganic hydrate) near the center of the heat transfer suppression sheet 10 to reach the thermal decomposition temperature thereof, so that the first inorganic particle 1 near the center of the sheet may not be completely thermally decomposed. Therefore, the average secondary particle diameter of the inorganic hydrate particle is preferably 0.01 $\mu$m or more and 200 $\mu$m or less, and more preferably 0.05 $\mu$m or more and 100 $\mu$m or less.

(particle composed of thermally expandable inorganic material)

Examples of the thermally expandable inorganic material include vermiculite, bentonite, mica, and perlite.

(particle composed of hydrous porous material)

Specific examples of the hydrous porous material include zeolite, kaolinite, montmorillonite, acid clay, diatomaceous earth, wet silica, dry silica, aerogel, mica, and vermiculite.

(Inorganic balloon)

The heat insulation material used in the present invention may contain an inorganic balloon as the first inorganic particle 1.

When the inorganic balloon is contained, the convective heat transfer or the conductive heat transfer of the heat within the heat insulation material can be suppressed in a temperature range of lower than 500°C, and the heat insulation property of the heat insulation material can be further improved.

As the inorganic balloon, at least one kind selected from whitebait balloon, silica balloon, fly ash balloon, perlite balloon, and glass balloon can be used.

(Content of inorganic balloon: 60 mass% or less with respect to total mass of heat insulation material)

The content of the inorganic balloon is preferably 60 mass% or less with respect to the total mass of the heat insulation material.

(Average particle diameter of inorganic balloon: 1 $\mu$m or more and 100 $\mu$m or less)

The average particle diameter of the inorganic balloon is preferably 1 $\mu$m or more and 100 $\mu$m or less.

<2-3-2. Second Inorganic particle>

When the heat transfer suppression sheet contains two kinds of inorganic particles, the second inorganic particle 12 is not particularly limited as long as they are different from the first inorganic particle 1 in kind, particle diameter, or the like. As the second inorganic particle 12, an oxide particle, a carbide particle, a nitride particle, an inorganic hydrate particle, a silica nanoparticle, a metal oxide particle, an inorganic balloon such as a microporous particle or a hollow silica particle, a particle composed of a thermally expandable inorganic material, a particle composed of a hydrous porous material, or the like can be used. Details of these are as described above.

Note that the nanoparticle has extremely low conductive heat transfer, and can maintain an excellent heat insulation property even when a compressive stress is applied to the heat transfer suppression sheet. In addition, a metal oxide particle such as titania has a high effect of blocking radiant heat. Further, when large-diameter inorganic particle and small-diameter inorganic particle are used, the small-diameter inorganic particle enter gaps between the large-diameter inorganic particle, leading to a more dense structure, and the heat transfer suppression effect can be improved. Therefore, when the nanoparticle is used as the first inorganic particle 1, it is preferable that the heat transfer suppression sheet further contains a particle composed of a metal oxide having a diameter larger than that of the first inorganic particle 1 as the second inorganic particle 12.

Examples of the metal oxide include silicon oxide, titanium oxide, aluminum oxide, barium titanate, zinc oxide, zircon, and zirconium oxide. Particularly, titanium oxide (titania) is a component having a high refractive index compared to other metal oxides, and has a high effect of diffusely reflecting light and blocking radiant heat in a high temperature range of 500°C or higher. Therefore, titania is most preferably used.

(Average primary particle diameter of second inorganic particle)

In the case where the second inorganic particle 12 composed of a metal oxide is contained in the heat transfer suppression sheet, when the average primary particle diameter of the second inorganic particle 12 is 1 $\mu$m or more and 50 $\mu$m or less, radiant heat transfer can be efficiently suppressed in a high temperature range of 500°C or higher. The average primary particle diameter of the second inorganic particle 12 is more preferably 5 $\mu$m or more and 30 $\mu$m or less, and most preferably 10 $\mu$m or less.

<2-4. First Inorganic Fiber and Second Inorganic Fiber>

It is preferable that the heat transfer suppression sheet according to the present embodiment contains the first inorganic fiber 31 and the second inorganic fiber 32 different from each other in at least one property selected from an average fiber diameter, a shape, and a glass transition point. When two kinds of inorganic fibers having different properties are contained as described in the second embodiment described above, the mechanical strength of the heat transfer suppression sheet and the retention property for the first inorganic particle 1 and the second inorganic particle 12 can be improved.

(2-4-1. Two kinds of Inorganic Fibers Having Different Average Fiber Diameters and Fiber Shapes)

When the heat transfer suppression sheet contains two kinds of inorganic fibers, it is preferable that the average fiber diameter of the first inorganic fiber 31 is larger than the average fiber diameter of the second inorganic fiber 32, the first inorganic fiber 31 is linear or acicular, and the second inorganic fiber 32 is dendritic or curly. The first inorganic fiber 31 having a large average fiber diameter (large diameter) has an effect of improving the mechanical strength and the shape retention property of the heat transfer suppression sheet. The above effect can be obtained by making one of the two kinds of inorganic fibers, for example, the first inorganic fiber 31, larger in diameter than that of the second inorganic fiber 32. Since external impacts may act on the heat transfer suppression sheet, the containing of the first inorganic fiber 31 in the heat transfer suppression sheet improves the impact resistance. External impacts include, for example, a pressing force due to expansion of battery cells, or a wind pressure due to ignition of battery cells.

In addition, in order to improve the mechanical strength and the shape retention property of the heat transfer suppression sheet, it is particularly preferable that the first inorganic fiber 31 is linear or acicular. Note that a linear or acicular fiber refers to a fiber having a degree of crimp, which will be described later, of, for example, less than 10%, and preferably 5% or less.

More specifically, in order to improve the mechanical strength and the shape retention property of the heat transfer suppression sheet, the average fiber diameter of the first inorganic fiber 31 is preferably 1 $\mu$m or more, and more preferably 3 $\mu$m or more. When the first inorganic fiber 31 is too thick, the moldability and the processability into a heat transfer suppression sheet may decrease. Therefore, the average fiber diameter of the first inorganic fiber 31 is preferably 20 $\mu$m or less, and more preferably 15 $\mu$m or less.

Note that the fiber length of the first inorganic fiber 31 is preferably 100 mm or less since when it is too long, the moldability and the processability may decrease. Further, when the first inorganic fiber 31 is too short, the shape retention property and the mechanical strength decrease. Therefore, the fiber length thereof is preferably 0.1 mm or more.

On the other hand, the second inorganic fiber 32 having a small average fiber diameter (small diameter) has an effect of improving the retention property for the organic fiber 3 and the first inorganic particle 1, and increasing the flexibility of the heat transfer suppression sheet. Therefore, it is preferable that the second inorganic fiber 32 has a diameter smaller than that of the first inorganic fiber 31.

More specifically, in order to improve the retention property for the organic fiber 3 and the first inorganic particle 1, it is preferable that the second inorganic fiber 32 is easily deformable and has flexibility. Therefore, the average fiber diameter of the second inorganic fiber 32 having a small diameter is preferably less than 1 $\mu$m, and more preferably 0.1 $\mu$m or less. However, when the small-diameter inorganic fiber is too thin, the small-diameter inorganic fiber is easily broken, and the ability to retain the organic fiber 3 and the first inorganic particle 1 decreases. In addition, a large proportion of fibers remain entangled in the heat transfer suppression sheet without retaining the organic fiber 3 and the first inorganic particle 1, and in addition to a decrease in ability to retain the organic fiber 3 and the first inorganic particle 1, the moldability and the shape retention property also become poor. Therefore, the average fiber diameter of the second inorganic fiber 32 is preferably 1 nm or more, and more preferably 10 nm or more.

Note that the fiber length of the second inorganic fiber 32 is preferably 0.1 mm or less since when the second inorganic fiber 32 is too long, the moldability and the shape retention property decrease. Further, when the second inorganic fiber 32 is too short, the shape retention property and the mechanical strength decrease. Therefore, the fiber length thereof is preferably 1 μm or more.

In addition, the second inorganic fiber 32 is preferably dendritic or curly. Having such a shape, the second inorganic fiber 32 is entangled with the organic fiber 3 and the first inorganic particle 1 in the heat transfer suppression sheet. Therefore, the ability to retain the organic fiber 3 and the first inorganic particle 1 is improved. In addition, when the heat transfer suppression sheet is subjected to a pressing force or a wind pressure, the second inorganic fiber 32 is suppressed from slipping and moving, thereby improving the mechanical strength, particularly against an external pressing force or impact.

Note that dendritic refers to a two-dimensionally or three-dimensionally branched structure, for example, feather-like, tetrapod-like, radial, or three-dimensional mesh-like.

When the second inorganic fiber 32 is dendritic, the average fiber diameter can be obtained by measuring the diameters of a trunk and branches at several points using an SEM and calculating the average value thereof.

In addition, curly refers to a structure in which the fibers are bent in various directions. As one method of quantifying the curly form, it is known to calculate the degree of crimp from an electron micrograph, which can be calculated according to the following equation, for example.

$$\text{Degree of crimp (\%)} = (\text{fiber length} - \text{distance between fiber ends})/(\text{fiber length}) \times 100$$

Here, both the fiber length and the distance between fiber ends are measured values on an electron micrograph. That is, the fiber length and the distance between fiber ends are values obtained by projection onto a two-dimensional plane, and are shorter than actual values. Based on this equation, the degree of crimp of the second inorganic fiber 32 is preferably 10% or more, and more preferably 30% or more. When the degree of crimp is small, the ability to retain the organic fiber 3 and the first inorganic particle 1 decreases, and entanglement (network) between the second inorganic fibers 32 and between the first inorganic fiber 31 and the second inorganic fiber 32 is difficult to form.

In the embodiment described above, as a method of improving the mechanical strength and the shape retention property of the heat transfer suppression sheet, and the retention property for the organic fiber 3 and the first inorganic particle 1, the first inorganic fiber 31 and the second inorganic fiber 32 having different average fiber diameters and fiber shapes are used. However, the mechanical strength, the shape retention property, and the particle retention property of the heat transfer suppression sheet can also be improved by using the first inorganic fiber 31 and the second inorganic fiber 32 having different glass transition points or average fiber diameters.

As described above, in the present embodiment, in order to improve the mechanical strength, the shape retention property, and the particle retention property of the heat transfer suppression sheet, it is preferable to use various combinations of inorganic fibers. Hereinafter, a combination of the first inorganic fiber and the second inorganic fiber different from the second embodiment shown in Fig. 2 will be described. In the present description, for convenience, other embodiments regarding inorganic fibers will be described using Fig. 2.

(2-4-2. Two kinds of Inorganic Fibers Having Different Glass Transition Points)

When the heat transfer suppression sheet contains two kinds of inorganic fibers, it is preferable that the first inorganic fiber 31 is an amorphous fiber, the second inorganic fiber 32 is at least one kind of fiber selected from a crystalline fiber and an amorphous fiber having a glass transition point higher than that of the first inorganic fiber 31. In addition, when the first inorganic particle 1 containing at least one kind selected from a nanoparticle, a hollow particle, and a porous particle is used with the two kinds of inorganic fibers, the heat insulation performance can be further improved.

The melting point of the crystalline inorganic fiber is usually higher than the glass transition point of the amorphous inorganic fiber. Therefore, when the first inorganic fiber 31 is exposed to a high temperature, the surface thereof softens before the second inorganic fiber 32 and binds the organic fiber 3 and the first inorganic particle 1. Therefore, by containing the first inorganic fiber 31 as described above in the heat transfer suppression sheet, the mechanical strength of a heat insulation layer can be improved.

Specifically, as the first inorganic fiber 31, an inorganic fiber having a melting point of lower than 700°C is preferred, and many amorphous inorganic fibers can be used. Among them, a fiber containing $SiO_2$ is preferred, and a glass fiber is more preferred because of being inexpensive, easily available, and having excellent handling properties.

As described above, the second inorganic fiber 32 is a fiber composed of at least one kind selected from a crystalline fiber and an amorphous fiber having a glass transition point higher than that of the first inorganic fiber 31. As the second inorganic fiber 32, many crystalline inorganic fibers can be used.

When the second inorganic fiber 32 is composed of a crystalline fiber or one having a glass transition point higher than that of the first inorganic fiber 31, even when the first inorganic fiber 31 softens when exposed to a high temperature, the second inorganic fiber 32 does not melt or soften. Therefore, even during thermal runaway of battery cells, it can maintain the shape and continue to be present between the battery cells.

In addition, when the second inorganic fiber 32 does not melt or soften, minute spaces are maintained between particles, between a particle and a fiber, and between fibers contained in the heat transfer suppression sheet. Therefore, the heat insulation effect due to air can be exhibited and an excellent heat transfer suppression performance can be retained.

When the second inorganic fiber 32 is crystalline, as the second inorganic fiber 32, ceramic-based fibers such as a silica fiber, an alumina fiber, an alumina silicate fiber, a zirconia fiber, a carbon fiber, a soluble fiber, a refractory ceramic fiber, an aerogel composite, a magnesium silicate fiber, an alkaline earth silicate fiber, and a potassium titanate fiber, glass-based fibers such as a glass fiber and glass wool, rock wool, and a basalt fiber, and natural mineral-based fibers such as wollastonite as mineral-based fibers other than those listed above can be used.

When the second inorganic fiber 32 is one having a melting point of higher than 1000°C among the fibers listed, even when the battery cell experiences thermal runaway, the second inorganic fiber 32 does not melt or soften and can maintain the shape, and can thus be suitably used.

Note that, among the fibers listed as the above second inorganic fiber 32, for example, it is more preferable to use ceramic-based fibers such as a silica fiber, an alumina fiber, and an alumina silicate fiber, and a natural mineral-based fiber. Among them, it is still more preferable to use one having a melting point of higher than 1000°C.

In addition, even when the second inorganic fiber 32 is amorphous, any fiber having a glass transition point higher than that of the first inorganic fiber 31 can be used. For example, a glass fiber having a glass transition point higher than that of the first inorganic fiber 31 may be used as the second inorganic fiber 32.

Note that, as the second inorganic fiber 32, the various illustrated inorganic fibers may be used alone, or two or more kinds thereof may be used in combination.

As described above, the first inorganic fiber 31 has a glass transition point lower than that of the second inorganic fiber 32, and when exposed to a high temperature, the first inorganic fiber 31 softens first. Therefore, the first inorganic fiber 31 can bind the organic fiber 3 and the first inorganic particle 1. However, for example, in the case where the second inorganic fiber 32 is amorphous and has a fiber diameter smaller than the fiber diameter of the first inorganic fiber 31, when the glass transition points of the first inorganic fiber 31 and the second inorganic fiber 32 are close to each other, the second inorganic fiber 32 may soften first.

Therefore, when the second inorganic fiber 32 is an amorphous fiber, the glass transition point of the second inorganic fiber 32 is preferably 100°C or more, and more preferably 300°C or more, higher than the glass transition point of the first inorganic fiber 31.

Note that, the fiber length of the first inorganic fiber 31 is preferably 100 mm or less, and is preferably 0.1 mm or more. The fiber length of the second inorganic fiber 32 is preferably 0.1 mm or less. The reasons are as described above.

(2-4-3. Two kinds of Inorganic Fibers Having Different Glass Transition Points and Average Fiber Diameters)

When the heat transfer suppression sheet contains two kinds of inorganic fibers, it is preferable that the first inorganic fiber 31 is an amorphous fiber, the second inorganic fiber 32 is at least one kind of fiber selected from a crystalline fiber and an amorphous fiber having a glass transition point higher than that of the first inorganic fiber 31, and the average fiber diameter of the first inorganic fiber 31 is larger than the average fiber diameter of the second inorganic fiber 32.

As described above, when the heat transfer suppression sheet according to the present embodiment contains two kinds of inorganic fibers, it is preferable that the average fiber diameter of the first inorganic fiber 31 is larger than that of the second inorganic fiber 32. In addition, it is preferable that the large-diameter first inorganic fiber 31 is an amorphous fiber, and the small-diameter second inorganic fiber 32 is at least one kind of fiber selected from a crystalline fiber and an amorphous fiber having a glass transition point higher than that of the first inorganic fiber 31. Accordingly, the first inorganic fiber 31 has a low glass transition point and softens early, and thus becomes film-like and hardens as the temperature rises. On the other hand, when the small-diameter second inorganic fiber 32 is at least one kind of fiber selected from a crystalline fiber and an amorphous fiber having a glass transition point higher than that of the first inorganic fiber 31, even when the temperature rises, the small-diameter second inorganic fiber 32 remains in the form of fiber. Therefore, the structure of the heat transfer suppression sheet can be retained and powder falling can be prevented.

Note that even in this case, the fiber length of the first inorganic fiber 31 is preferably 100 mm or less, and preferably 0.1 mm or more. The fiber length of the second inorganic fiber 32 is preferably 0.1 mm or less. The reasons are as described above.

In addition, the heat transfer suppression sheet according to the present embodiment may contain different inorganic fibers in addition to the first inorganic fiber 31 and the second inorganic fiber 32.

(2-4-4. Contents of First Inorganic Fiber and Second Inorganic Fiber)

When the heat transfer suppression sheet contains two kinds of inorganic fibers, the content of the first inorganic fiber 31 is preferably 3 mass% or more and 30 mass% or less with respect to the total mass of the heat transfer suppression sheet, and the content of the second inorganic fiber 32 is preferably 3 mass% or more and 30 mass% or less with respect to the total mass of the heat transfer suppression sheet.

In addition, the content of the first inorganic fiber 31 is more preferably 5 mass% or more and 15 mass% or less with respect to the total mass of the heat transfer suppression sheet, and the content of the second inorganic fiber 32 is more preferably 5 mass% or more and 15 mass% or less with respect to the total mass of the heat transfer suppression sheet. With such contents, the shape retention property, the pressing force resistance, and the wind pressure resistance of the first inorganic fiber 31 and the ability to retain the inorganic particle of the second inorganic fiber 32 are exhibited in a well-balanced manner.

<2-5. Thickness of Heat Transfer Suppression Sheet>

The thickness of the heat transfer suppression sheet according to the present embodiment is not particularly limited, and is preferably 0.05 mm or more and 10 mm or less. When the thickness is 0.05 mm or more, sufficient compressive strength can be obtained. On the other hand, when the thickness is 10 mm or less, a good heat insulation property of the heat transfer suppression sheet can be obtained.

[3. Battery Pack]

Fig. 3 is a schematic diagram showing a battery pack according to an embodiment of the present invention. A battery pack 100 according to the present embodiment includes a plurality of battery cells 20a, 20b, and 20c, and the heat transfer suppression sheet according to the present embodiment, and the plurality of battery cells are connected in series or in parallel.

For example, as shown in Fig. 3, the heat transfer suppression sheet 10 according to the present embodiment is interposed between the battery cell 20a and the battery cell 20b and between the battery cell 20b and the battery cell 20c. Further, the battery cells 20a, 20b, and 20c and the heat transfer suppression sheet 10 are stored in a battery case 30.

Note that, the heat transfer suppression sheet 10 is as described above.

In the battery pack 100 configured in this manner, even when a certain battery cell 20a has a high temperature, since the heat transfer suppression sheet 10 having a heat transfer suppression effect is present between the battery cell 20a and the battery cell 20b, it is possible to suppress the propagation of heat to the battery cell 20b.

In addition, since the heat transfer suppression sheet 10 according to the present embodiment has high compressive strength, thermal expansion of the battery cells 20a, 20b, and 20c can also be suppressed during charging and discharging of the battery cells. Therefore, the distance between the battery cells can be ensured, a decrease in heat insulation performance can be suppressed, and the thermal runaway of the battery cells can be prevented. In addition, since the effect of suppressing thermal expansion can prevent deformation of the battery cells, the load on the battery case 30 can be suppressed.

Note that the battery pack 100 according to the present embodiment is not limited to the battery pack shown in Fig. 3, and the heat transfer suppression sheet 10 can be disposed not only between the battery cell 20a and the battery cell 20b or between the battery cell 20b and the battery cell 20c, but also between the battery cells 20a, 20b, and 20c and the battery case 30.

In the battery pack 100 configured in this manner, when a certain battery cell ignites, it is possible to suppress the flame from spreading to the outside of the battery case 30.

For example, the battery pack 100 according to the present embodiment is used in an electric vehicle (EV) or the like, and is sometimes disposed under a passenger's floor. In this case, even when the battery cell ignites, the safety of the passenger can be ensured.

In addition, since the heat transfer suppression sheet 10 can be disposed not only between the battery cells but also between the battery cells 20a, 20b, and 20c and the battery case 30, it is not necessary to newly prepare a flame retardant material or the like, and a safe battery pack 100 can be easily formed at a low cost.

In the battery pack according to the present embodiment, the heat transfer suppression sheet 10 disposed between the battery cells 20a, 20b, and 20c and the battery case 30 may be in contact with the battery cell 101 or may have a gap therebetween. However, in the case where there is a gap between the heat transfer suppression sheet 10 and the battery cells 20a, 20b, and 20c, even when the temperature of any one battery cell of the plurality of battery cells rises and the volume expands, the deformation of the battery cell is allowable.

Note that the heat transfer suppression sheet 10 according to the present embodiment can be easily bent depending on the kind and the thickness of the material. Therefore, it is not influenced by the shapes of the battery cells 20a, 20b, and 20c and the battery case 30, and can be adapted to any shape. Specifically, it can be applied to cylindrical batteries, flat batteries, and the like, in addition to prismatic batteries.

Examples

Hereinafter, the present invention will be described in detail with reference to Examples and Comparative Examples, but the present invention is not limited thereto.

<Preparation of Test Material>

(Example No. 1)

A polyester (PET) fiber, as a crystalline organic fiber having no glass transition point, and a polyvinyl alcohol (PVA) fiber having a glass transition point were prepared as the organic fiber, a latex solution having a glass transition point of 58°C was prepared as the resin binder, silica particles and titanium oxide particles were prepared as the first inorganic particle and the second inorganic particle, and a silica-based fiber and a glass fiber, as inorganic fibers, were prepared as other components. The specific content and name of each component are shown below.

· Polyester fiber (3 parts): 0.1 dtex × 3 mm (average fiber length)
· PVA fiber (5 parts): VPB053 (manufactured by KURARAY CO., LTD.), 0.55 dtex × 3 mm

· Latex solution (styrene-butadiene resin, 5 parts): glass transition point: 58°C
· First inorganic particle, second inorganic particle (70 parts in total): silica particles and titanium oxide particles
· First inorganic fiber (7 parts): silica-based fiber
· Second inorganic fiber (10 parts): glass fiber, CS 3J-888S (manufactured by Nitto Boseki Co., Ltd.), fiber diameter 10 $\mu$m × fiber length 6 mm

The above materials were dispersed in water using a pulper to prepare a uniform papermaking slurry (dispersion liquid), and then dehydrated using a papermaking machine to obtain a wet sheet.
Thereafter, the wet sheet was dried using a Yankee dryer with a surface temperature of 140°C, and then heated to 250°C by hot air drying to obtain a dry sheet. Thereafter, the dry sheet was cooled to prepare a test material in Example No. 1 having a basis weight of 600 (g/m$^2$) and a thickness of 1.5 mm.
Note that, the content of the polyester fiber was 3 mass%, the content of the PVA fiber was 5 mass%, and the content of the resin binder (styrene-butadiene resin) was 5 mass%, with respect to the total mass of the obtained test material in Example No. 1.

(Example No. 2)

A polyester (PET) fiber, as a crystalline organic fiber having no glass transition point, and a polyvinyl alcohol (PVA) fiber having a glass transition point were prepared as the organic fiber, a latex solution having a glass transition point of -9°C was prepared as the resin binder, silica particles and titanium oxide particles were prepared as the inorganic particle, and a silica-based fiber and a glass fiber, as inorganic fibers, were prepared as other components.

· Polyester fiber (3 parts): 0.1 dtex × 3 mm
· PVA fiber (5 parts): VPB053 (manufactured by KURARAY CO., LTD.), 0.55 dtex × 3 mm (average fiber length)

· Latex solution (5 parts of acrylic resin): glass transition point: -9°C
· First inorganic particle, second inorganic particle (70 parts in total): silica particles and titanium oxide particles
· First inorganic fiber (7 parts): silica-based fiber
· Second inorganic fiber (10 parts): glass fiber, CS 3J-888S (manufactured by Nitto Boseki Co., Ltd.), fiber diameter 10 $\mu$m × fiber length 6 mm

Thereafter, a wet sheet was prepared in the same manner as in Example No. 1, heated, dried, and then cooled, to prepare a test material in Example No. 2 having a basis weight of 600 (g/m$^2$) and a thickness of 1.5 mm.
Note that, the content of the polyester fiber was 3 mass%, the content of the PVA fiber was 5 mass%, and the content of the resin binder (acrylic resin) was 5 mass%, with respect to the total mass of the obtained test material in Example No. 2.

(Comparative Example No. 1)

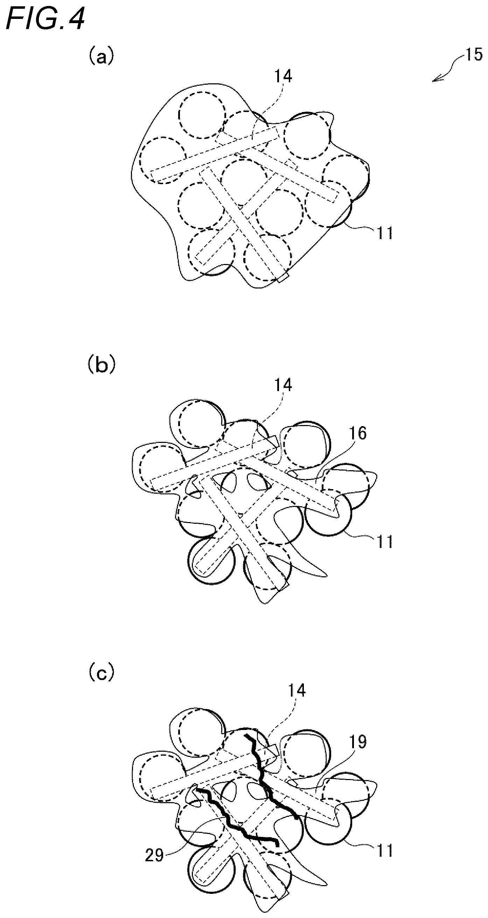

In order to clarify the difference from Examples, the production method in Comparative Example No. 1 will be described with reference to the drawings. (a) to (c) in Fig. 4 are schematic diagrams showing a method for producing a test material in Comparative Example No. 1 in order of steps.

As shown in (a) in Fig. 4, a latex solution having a glass transition point of -9°C was prepared as the resin binder, silica particles and titanium oxide particles were prepared as the inorganic particles 11, and a silica-based fiber and a glass fiber, as the inorganic fiber 14, were prepared as other components.

· Polyester fiber (3 parts): 0.1 dtex × 3 mm
· Latex solution (10 parts of acrylic resin): glass transition point: -9°C
· Inorganic particles 11 (first inorganic particle, second inorganic particle) (70 parts in total): silica particles and titanium oxide particles

· Inorganic fiber 14 (first inorganic fiber, second inorganic fiber): silica-based fiber (7 parts), glass fiber (10 parts), CS 3J-888S (manufactured by Nitto Boseki Co., Ltd.), fiber diameter 10 $\mu$m × fiber length 6 mm

The above materials were dispersed in water using a pulper to prepare a uniform papermaking slurry (dispersion liquid 15), and then dehydrated using a papermaking machine to obtain a wet sheet.

Thereafter, the wet sheet was dried using a Yankee dryer with a surface temperature of 140°C, and then heated to 250°C using a hot air dryer. Accordingly, as shown in (b) in Fig. 4, as the temperature rose, water evaporated and a molten resin binder 16 was obtained.

Thereafter, by cooling, the inorganic particle 11 and the inorganic fiber 14 adhered each other by a solidified resin binder 19, as shown in (c) in Fig. 4.

In this way, a test material in Comparative Example No. 1 having a basis weight of 600 (g/m$^2$) and a thickness of 1.5 mm was prepared.

The glass transition points of the materials used for each test material are shown in Table 1 below.

Note that, the glass transition points of the resin binder and the organic fiber can be calculated by differential scanning calorimetry (DSC), dynamic mechanical analysis (DMA), and thermomechanical analysis (TMA).

However, of the two kinds of organic fibers used in the above Examples and Comparative Example, as described above, the polyester (PET) fiber is a crystalline organic fiber having no glass transition point, and therefore, the glass transition point of the organic fiber shown in Table 1 below refers to the glass transition point of the polyvinyl alcohol (PVA) fiber having a glass transition point.

[Table 1]

| Test material | Resin binder | Organic fiber | |
| --- | --- | --- | --- |
| | Glass transition point (°C) | Glass transition point (°C) | Water Dissolution temperature (°C) |
| Example No. 1 | 58 | 120 | 100 < |
| Example No. 2 | -9 | 120 | 100 < |
| Comparative Example No. 1 | -9 | - | - |

<Evaluation Method for Test Material>

For each test material, a compression property test, a heat transfer property test, and a heat insulation performance test were conducted to evaluate the compression property and the heat insulation performance.

(Compression Property Test)

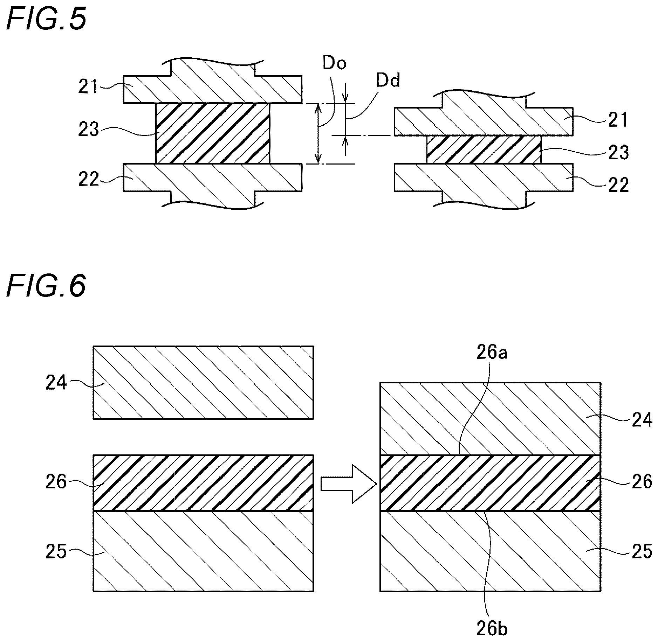

As shown in Fig. 5, a universal testing machine was used, a test material 23 was disposed between an upper plate 21 and a lower plate 22, and the test material 23 was pressed by moving the upper plate 21 downward. Note that the size of the test material 23 was 25 mm × 25 mm × 1.5 mm, the compression speed was 0.5 (mm/min), and the maximum compressive stress was 5 MPa.

Then, a compression rate C (%) was calculated according to the following equation, where the initial thickness of the test material 23 was $D_0$ (mm) and the amount of compression (reduced thickness) was $D_d$ (mm).

$$C = D_d/D_0 \times 100$$

Note that, the compression property test was conducted for Example No. 1 and Comparative Example No. 1.

(Heat Transfer Property Test)

As shown in Fig. 6, an upper board 24 and a lower board 25 made of iron were prepared, and a test material 26 was placed on the lower board 25. Next, the upper board 24 heated to 800°C was disposed on an upper surface 26a of the test material 26, and a pressure of 3.5 MPa was applied downward to the test material 26. At this time, a temperature sensor (not shown) was set between a lower surface 26b of the test material 26 and the lower board 25, and a lower surface temperature $T_c$ (°C) was measured. A temperature sensor (not shown) was set between the upper surface 26a of the test material 26 and the upper board 24, and an upper surface temperature $T_h$ (°C) was measured. Then, a change in lower surface temperature $T_c$ (°C) with respect to time was observed.

(Heat Insulation Performance Test)

The heat insulation performance was determined by first measuring a heat conductivity λ (W/m·K) at room temperature using a hot wire method, which corresponded to an unsteady method among methods for measuring a heat conductivity, to obtain a heat conductivity λ (W/m·K) of the test material.
Thereafter, a thermal resistance value R (m²·K/W) was calculated according to the following equation using the heat conductivity λ (W/m·K), the initial thickness $D_0$ (m), and the compression rate C (%) of the test material.

$$R = D_0/\lambda \times (100-C)/100$$

<Evaluation Result for Test Material>

(Compression Property Test Result)

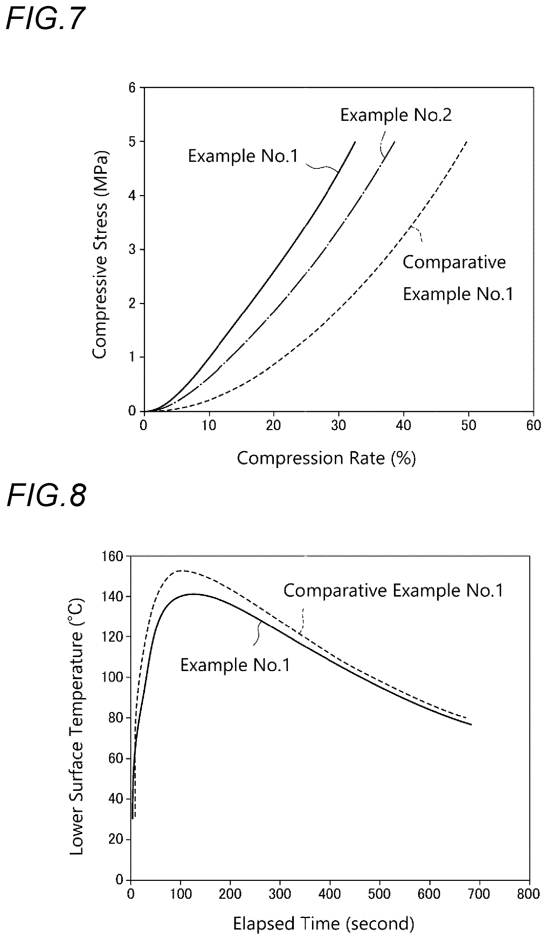

Fig. 7 is a graph showing a relationship between the compressive stress and the compression rate for each test material, where the horizontal axis is the compression rate and the vertical axis is the compressive stress.
As shown in Fig. 7, when the same pressure is applied, Example No. 1 and Example No. 2 have a compression rate lower than that of Comparative Example No. 1, indicating excellent compression properties. In particular, as compared to Example No. 2, in Example No. 1, the glass transition point of the resin binder is 20°C or higher, and the difference in glass transition point between the organic fiber and the resin binder is 62°C, which are both within the preferred ranges of the present invention, so that excellent compression properties can be obtained.

(Heat Transfer Property Test Result)

Fig. 8 is a graph showing a relationship between the lower surface temperature and the elapsed time for each test material, where the horizontal axis is the elapsed time and the vertical axis is the lower surface temperature.
As shown in Fig. 8, Example No. 1 has a peak value of the lower surface temperature lower than that in Comparative Example No. 1. That is, it indicates that Example No. 1 has a more excellent heat insulation property.
Note that, as shown in (c) in Fig. 4, since in Comparative Example No. 1, a framework made by an organic fiber is not formed, the strength of the test material deteriorates by being heated by the upper board 24 at 800°C, and defects 29 are formed due to pressing, resulting in a decrease in compressive strength.

(Heat Insulation Performance Test Result)

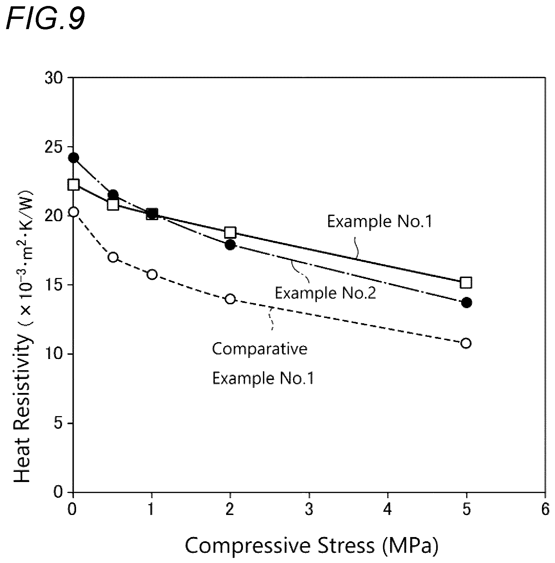

Fig. 9 is a graph showing a relationship between the heat resistivity and the compressive stress for each test material, where the horizontal axis is the compressive stress and the vertical axis is the heat resistivity.
As shown in Fig. 9, Example No. 1 and Example No. 2 show a heat resistivity higher than that of Comparative Example No. 1 at any compressive stress. In particular, as compared to Example No. 2, in Example No. 1, the glass transition point of the resin binder and the difference in glass transition point between the organic fiber and the resin binder are both within the preferred ranges of the present invention, so that a degree of decrease in heat resistivity is small even when the compressive stress is increased.
Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the scope of the present invention.

Note that the present application is based on a Japanese patent application (Japanese Patent Application No. 2021-135188) filed on August 20, 2021 and a Japanese patent application (Japanese Patent Application No. 2021-205572) filed on December 17, 2021.

REFERENCE SIGNS LIST

1 first inorganic particle
2 emulsion
3 organic fiber
4, 14 inorganic fiber
5, 15 dispersion liquid
6, 9, 16, 19 resin binder
7 fused portion
8 framework
10 heat transfer suppression sheet
12 second inorganic particle
20a, 20b, 20c battery cell
30 battery case
31 first inorganic fiber
32 second inorganic fiber
100 battery pack

## Claims

1. A heat transfer suppression sheet comprising:

   a first inorganic particle;
   a resin binder;
   an organic fiber; and
   optionally a second inorganic particle composed of a metal oxide; wherein
   the organic fiber has a glass transition point higher than a glass transition point of the resin binder,
   at least a part of the organic fiber is fused each other to form a three-dimensional framework, and
   the resin binder is fused to a part of the framework and at least a part of the first inorganic particle, and at least the part of the first inorganic particle adheres to the framework.

2. The heat transfer suppression sheet according to claim 1, wherein the glass transition point of the organic fiber is 250°C or lower, and/or wherein the organic fiber has a water dissolution temperature of 60°C or higher.

3. The heat transfer suppression sheet according to claims 1 or 2, wherein the glass transition point of the resin binder is -10°C or higher, and/or wherein a difference between the glass transition point of the resin binder and the glass transition point of the organic fiber is 10°C or more and 130°C or less.

4. The heat transfer suppression sheet according to any one of claims 1 to 3, wherein the organic fiber has an average fiber length of 0.5 mm or more and 10 mm or less.

5. The heat transfer suppression sheet according to any one of claims 1 to 4, wherein

   with respect to a total mass of the heat transfer suppression sheet,
   a content of the organic fiber is 0.5 mass% or more and 12 mass% or less, and
   a content of the resin binder is 0.5 mass% or more and 20 mass% or less.

6. The heat transfer suppression sheet according to any one of claims 1 to 5, wherein the resin binder includes at least one kind selected from a styrene-butadiene resin, an acrylic resin, a silicone-acrylic resin, and a styrene resin.

7. The heat transfer suppression sheet according to any one of claims 1 to 6, wherein the organic fiber includes at least one kind selected from a polyvinyl alcohol fiber, a polyethylene fiber, a nylon fiber, a polyurethane fiber, and an ethylene-vinyl alcohol copolymer fiber.

8. The heat transfer suppression sheet according to any one of claims 1 to 7, wherein the first inorganic particle is composed of at least one kind selected from an oxide particle, a carbide particle, a nitride particle, and an inorganic hydrate particle.

9. The heat transfer suppression sheet according to any one of claims 1 to 8, further comprising:
   a first inorganic fiber and a second inorganic fiber different from each other in at least one property selected from an average fiber diameter, a shape, and a glass transition point.

10. The heat transfer suppression sheet according to claim 9, wherein

    the average fiber diameter of the first inorganic fiber is larger than the average fiber diameter of the second inorganic fiber, and
    the first inorganic fiber is linear or acicular, and the second inorganic fiber is dendritic or curly.

11. The heat transfer suppression sheet according to claim 9, wherein

    the first inorganic fiber is an amorphous fiber,
    the second inorganic fiber is at least one kind of fiber selected from an amorphous fiber having a glass transition point higher than the glass transition point of the first inorganic fiber and a crystalline fiber, and
    the average fiber diameter of the first inorganic fiber is larger than the average fiber diameter of the second inorganic fiber.

12. The heat transfer suppression sheet according to claim 9, wherein

    the first inorganic particle includes at least one kind selected from a nanoparticle, a hollow particle, and a porous particle,
    the first inorganic fiber is an amorphous fiber, and
    the second inorganic fiber is at least one kind of inorganic fiber selected from an amorphous fiber having a glass transition point higher than the glass transition point of the first inorganic fiber and a crystalline fiber.

13. The heat transfer suppression sheet according to any one of claims 9 to 12, wherein the first inorganic fiber is a fiber containing $SiO_2$, and the second inorganic fiber is at least one kind of fiber selected from a glass fiber, a silica fiber, an alumina fiber, an alumina silicate fiber, a zirconia fiber, glass wool, a carbon fiber, a soluble fiber, a refractory ceramic fiber, an aerogel composite, a magnesium silicate fiber, an alkaline earth silicate fiber, a potassium titanate fiber, and a natural mineral-based fiber.

14. A method for producing a heat transfer suppression sheet according to any one of claims 1 to 13, the method comprising:

    a step of obtaining a dispersion liquid containing the first inorganic particle, the resin binder, and the organic fiber, wherein the dispersion liquid is optionally an emulsion in which the resin binder is dispersed in water;
    a step of obtaining a wet sheet by removing the dispersion liquid; and
    a step of heating and then cooling the wet sheet, wherein
    a heating temperature at which the wet sheet is heated is set higher than the glass transition point of the organic fiber by 10°C or more and 50°C or less.

15. A battery pack comprising:

    a plurality of battery cells; and
    the heat transfer suppression sheet according to any one of claims 1 to 13, wherein
    the plurality of battery cells is connected in series or in parallel.

**Patentansprüche**

1. Wärmeübertragungsunterdrückungsfolie, umfassend:

   ein erstes anorganisches Partikel,
   ein Harzbindemittel,
   eine organische Faser und
   optional ein zweites anorganisches Partikel, das aus einem Metalloxid zusammengesetzt ist, wobei
   die organische Faser einen Glasübergangspunkt aufweist, der höher als ein Glasübergangspunkt des Harzbindemittels ist,
   mindestens ein Teil der organischen Faser miteinander verschmolzen ist, um ein dreidimensionales Gerüst zu bilden, und
   das Harzbindemittel mit einem Teil des Gerüsts und mindestens einem Teil des ersten anorganischen Partikels verschmolzen ist und mindestens ein Teil des ersten anorganischen Partikels an dem Gerüst haftet.

2. Wärmeübertragungsunterdrückungsfolie gemäß Anspruch 1, wobei der Glasübergangspunkt der organischen Faser 250°C oder niedriger ist und/oder wobei die organische Faser eine Wasserauflösungstemperatur von 60°C oder höher aufweist.

3. Wärmeübertragungsunterdrückungsfolie gemäß Anspruch 1 oder 2, wobei der Glasübergangspunkt des Harzbindemittels -10°C oder höher ist und/oder wobei eine Differenz zwischen dem Glasübergangspunkt des Harzbindemittels und dem Glasübergangspunkt der organischen Faser 10°C oder mehr und 130°C oder weniger beträgt.

4. Wärmeübertragungsunterdrückungsfolie gemäß einem der Ansprüche 1 bis 3, wobei die organische Faser eine durchschnittliche Faserlänge von 0,5 mm und 10 mm oder weniger aufweist.

5. Wärmeübertragungsunterdrückungsfolie gemäß einem der Ansprüche 1 bis 4, wobei

   in Bezug auf eine Gesamtmasse der Wärmeübertragungsunterdrückungsfolie
   ein Gehalt der organischen Faser 0,5 Masse-% oder mehr und 12 Masse-% oder weniger beträgt und
   ein Gehalt des Harzbindemittels 0,5 Masse-% oder mehr und 20 Masse-% oder weniger beträgt.

6. Wärmeübertragungsunterdrückungsfolie gemäß einem der Ansprüche 1 bis 5, wobei das Harzbindemittel mindestens eine Art, ausgewählt aus einem Styrol-Butadien-Harz, einem Acrylharz, einem Silikon-Acryl-Harz und einem Styrolharz, einschließt.

7. Wärmeübertragungsunterdrückungsfolie gemäß einem der Ansprüche 1 bis 6, wobei die organische Faser mindestens eine Art, ausgewählt aus einer Polyvinylalkoholfaser, einer Polyethylenfaser, einer Nylonfaser, einer Polyurethanfaser und einer Ethylen-Vinylalkohol-Copolymerfaser, einschließt.

8. Wärmeübertragungsunterdrückungsfolie gemäß einem der Ansprüche 1 bis 7, wobei das erste anorganische Partikel aus mindestens einer Art, ausgewählt aus einem Oxidpartikel, einem Carbidpartikel, einem Nitridpartikel und einem Partikel aus einem anorganischen Hydrat, zusammengesetzt ist.

9. Wärmeübertragungsunterdrückungsfolie gemäß einem der Ansprüche 1 bis 8, ferner umfassend:
   eine erste anorganische Faser und eine zweite anorganische Faser, die sich voneinander in mindestens einer Eigenschaft, ausgewählt aus einem durchschnittlichen Faserdurchmesser, einer Form und einem Glasübergangspunkt, unterscheiden.

10. Wärmeübertragungsunterdrückungsfolie gemäß Anspruch 9, wobei

    der durchschnittliche Faserdurchmesser der ersten anorganischen Faser größer als der durchschnittliche Faserdurchmesser der zweiten anorganischen Faser ist und
    die erste anorganische Faser lineare oder nadelförmig ist und die zweite anorganische Faser dendritisch oder gekräuselt ist.

11. Wärmeübertragungsunterdrückungsfolie gemäß Anspruch 9, wobei

die erste anorganische Faser eine amorphe Faser ist,

die zweite anorganische Faser mindestens eine Faserart, ausgewählt aus einer amorphen Faser mit einem Glasübergangspunkt, der höher als der Glasübergangspunkt der ersten anorganischen Faser ist, und einer kristallinen Faser, ist und

der durchschnittliche Faserdurchmesser der ersten anorganischen Faser größer als der durchschnittliche Faserdurchmesser der zweiten anorganischen Faser ist.

12. Wärmeübertragungsunterdrückungsfolie gemäß Anspruch 9, wobei

das erste anorganische Partikel mindestens eine Art, ausgewählt aus einem Nanopartikel, einem hohlen Partikel und einem porösen Partikel, einschließt,

die erste anorganische Faser eine amorphe Faser ist und

die zweite anorganische Faser mindestens eine anorganische Faserart, ausgewählt aus einer amorphen Faser mit einem Glasübergangspunkt, der höher als der Glasübergangspunkt der ersten anorganischen Faser ist, und einer kristallinen Faser, ist

13. Wärmeübertragungsunterdrückungsfolie gemäß einem der Ansprüche 9 bis 12, wobei die erste anorganische Faser eine Faser ist, die $SiO_2$ enthält, und die zweite anorganische Faser mindestens eine Faserart, ausgewählt aus einer Glasfaser, einer Siliciumdioxidfaser, einer Aluminiumoxidfaser, einer Aluminiumoxidsilikatfaser, einer Zirkoniumoxidfaser, Glaswolle, einer Kohlenstofffaser, einer löslichen Faser, einer feuerfesten Keramikfaser, einem Aerogel-Verbundwerkstoff, einer Magnesiumsilikatfaser, einer Erdalkalisilikatfaser, einer Kaliumtitanatfaser und einer Faser auf Basis eines natürlichen Minerals, ist.

14. Verfahren zur Herstellung einer Wärmeübertragungsunterdrückungsfolie gemäß einem der Ansprüche 1 bis 13, wobei das Verfahren umfasst:

einen Schritt zum Erhalten einer Dispersionsflüssigkeit, die das erste anorganische Partikel, das Harzbindemittel und die organische Faser enthält, wobei die Dispersionsflüssigkeit optional eine Emulsion ist, in der das Harzbindemittel in Wasser dispergiert ist,

einen Schritt zum Erhalten einer nassen Folie durch Entfernen der Dispersionsflüssigkeit und

einen Schritt zum Erwärmen und anschließendem Abkühlen der nassen Folie, wobei

eine Erwärmungstemperatur, bei der die nasse Folie erwärmt wird, um 10°C oder mehr und 50°C oder weniger höher als der Glasübergangspunkt der organischen Faser eingestellt wird.

15. Batteriepack, umfassend:

eine Vielzahl von Batteriezellen und

die Wärmeübertragungsunterdrückungsfolie gemäß einem der Ansprüche 1 bis 13, wobei

die Vielzahl von Batteriezellen in Reihe oder parallel geschaltet ist.

## Revendications

1. Feuille de suppression de transfert de chaleur comprenant :

une première particule inorganique ;

une résine liante ;

une fibre organique ; et

facultativement une deuxième particule inorganique composée d'un oxyde métallique ; dans laquelle

la fibre organique présente une température de transition vitreuse

supérieure à la température de transition vitreuse de la résine liante,

au moins une partie de la fibre organique est constituée de fibres fusionnées

les unes aux autres de façon à former un réseau tridimensionnel, et

la résine liante est fusionnée à une partie du réseau tridimensionnel et à au moins une partie de la première particule inorganique, et au moins ladite partie de la première particule inorganique adhère au réseau tridimensionnel.

2. Feuille de suppression de transfert de chaleur selon la revendication 1, dans laquelle la température de transition vitreuse de la fibre organique est inférieure ou égale à 250 °C, et/ou dans laquelle la fibre organique présente une température de dissolution dans l'eau supérieure ou égale à 60 °C.

3. Feuille de suppression de transfert de chaleur selon les revendications 1 ou 2, dans laquelle la température de transition vitreuse de la résine liante est supérieure ou égale à -10 °C, et/ou dans laquelle une différence entre la température de transition vitreuse de la résine liante et la température de transition vitreuse de la fibre organique est de 10 °C ou plus et de 130 °C ou moins.

4. Feuille de suppression de transfert de chaleur selon l'une quelconque des revendications 1 à 3, dans laquelle la fibre organique présente une longueur de fibre moyenne de 0,5 mm ou plus et de 10 mm ou moins.

5. Feuille de suppression de transfert de chaleur selon l'une quelconque des revendications 1 à 4, dans laquelle

   par rapport à une masse totale de la feuille de suppression de transfert de chaleur,
   une teneur en fibre organique est de 0,5 % en masse ou plus et de 12 % en masse ou moins, et
   une teneur en résine liante est de 0,5 % en masse ou plus et de 20 % en masse ou moins.

6. Feuille de suppression de transfert de chaleur selon l'une quelconque des revendications 1 à 5, dans laquelle la résine liante inclut au moins un type sélectionné parmi une résine styrène-butadiène, une résine acrylique, une résine silicone-acrylique, et une résine styrène.

7. Feuille de suppression de transfert de chaleur selon l'une quelconque des revendications 1 à 6, dans laquelle la fibre organique inclut au moins un type sélectionné parmi une fibre d'alcool polyvinylique, une fibre de polyéthylène, une fibre de nylon, une fibre de polyuréthane, et une fibre de copolymère éthylène-alcool vinylique.

8. Feuille de suppression de transfert de chaleur selon l'une quelconque des revendications 1 à 7, dans laquelle la première particule inorganique est composée d'au moins un type sélectionné parmi une particule d'oxyde, une particule de carbure, une particule de nitrure, et une particule d'hydrate inorganique.

9. Feuille de suppression de transfert de chaleur selon l'une quelconque des revendications 1 à 8, comprenant en outre : une première fibre inorganique et une deuxième fibre inorganique différentes l'une de l'autre par au moins une propriété sélectionnée parmi un diamètre de fibre moyen, une forme, et une température de transition vitreuse.

10. Feuille de suppression de transfert de chaleur selon la revendication 9, dans laquelle

    le diamètre de fibre moyen de la première fibre inorganique est plus grand que le diamètre de fibre moyen de la deuxième fibre inorganique, et
    la première fibre inorganique est linéaire ou aciculaire, et la deuxième fibre inorganique est dendritique ou ondulée.

11. Feuille de suppression de transfert de chaleur selon la revendication 9, dans laquelle

    la première fibre inorganique est une fibre amorphe,
    la deuxième fibre inorganique est au moins un type de fibre sélectionné parmi une fibre amorphe présentant une température de transition vitreuse supérieure à la température de transition vitreuse de la première fibre inorganique et une fibre cristalline, et
    le diamètre de fibre moyen de la première fibre inorganique est plus grand que le diamètre de fibre moyen de la deuxième fibre inorganique.

12. Feuille de suppression de transfert de chaleur selon la revendication 9, dans laquelle

    la première particule inorganique inclut au moins un type sélectionné parmi une nanoparticule, une particule creuse, et une particule poreuse,
    la première fibre inorganique est une fibre amorphe, et
    la deuxième fibre inorganique est au moins un type de fibre inorganique sélectionné parmi une fibre amorphe présentant une température de transition vitreuse supérieure à la température de transition vitreuse de la première fibre inorganique et une fibre cristalline.

**13.** Feuille de suppression de transfert de chaleur selon l'une quelconque des revendications 9 à 12, dans laquelle la première fibre inorganique est une fibre contenant du $SiO_2$, et la deuxième fibre inorganique est au moins un type de fibre sélectionné parmi une fibre de verre, une fibre de silice, une fibre d'alumine, une fibre de silicate d'alumine, une fibre de zircone, une laine de verre, une fibre de carbone, une fibre soluble, une fibre céramique réfractaire, un composite d'aérogel, une fibre de silicate de magnésium, une fibre de silicate de métal alcalino-terreux, une fibre de titanate de potassium, et une fibre à base de minéral naturel.

**14.** Procédé de production d'une feuille de suppression de transfert de chaleur selon l'une quelconque des revendications 1 à 13, le procédé comprenant :

une étape d'obtention d'un liquide de dispersion contenant la première particule inorganique, la résine liante, et la fibre organique, le liquide de dispersion étant facultativement une émulsion dans laquelle la résine liante est dispersée dans l'eau ;
une étape d'obtention d'une feuille humide par élimination du liquide de dispersion ; et
une étape de chauffage puis de refroidissement de la feuille humide, dans laquelle
une température de chauffage à laquelle la feuille humide est chauffée est fixée à une température supérieure à la température de transition vitreuse de la fibre organique de 10 °C ou plus et de 50 °C ou moins

**15.** Bloc-batterie comprenant :

une pluralité de cellules de batterie ; et
la feuille de suppression de transfert de chaleur selon l'une quelconque des revendications 1 à 13, dans laquelle la pluralité de cellules de batterie est connectée en série ou en parallèle.

*FIG.1*

(a)

(b)

(c)

*FIG.2*

*FIG.3*

*FIG.4*

(a)

(b)

(c)

FIG.5

FIG.6

## FIG.7

## FIG.8

## FIG.9

**EP 4 450 861 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021034278 A
- JP 2013535582 A
- JP 2021135188 A
- JP 2021205572 A